# EUROPÄISCHE PATENTSCHRIFT

(11) **EP 0 365 974 B1**
(45) Veröffentlichungstag und Bekanntmachung des Hinweises auf die Patenterteilung: **29.12.1993**
(21) Anmeldenummer: 89119234.6
(22) Anmeldetag: 17.10.1989
(51) Int. Cl.: C08F 210/16, C08F 4/602, C08F 210/02

(54) **Verfahren zur Herstellung eines Ethylen-Propylen-Copolymers**
Process for preparing an ethylene-propylene copolymer
Procédé de préparation d'un copolymère éthylène-propylène

(30) Priorität: 22.10.1988 DE 3836059
(43) Veröffentlichungstag der Anmeldung: 02.05.1990
(73) Patentinhaber: HOECHST AKTIENGESELLSCHAFT, 65926 Frankfurt am Main (DE)
(72) Erfinder: Antberg, Martin, Dr., D-6238 Hofheim am Taunus (DE); Spaleck, Walter, Dr., D-6237 Liederbach (DE); Rohrmann, Jürgen, Dr., D-6237 Liederbach (DE); Lüker, Hartmut, Dr., D-5020 Frechen 4 (DE); Winter, Andreas, Dr., D-6233 Kelkheim (Taunus) (DE)

(56) Entgegenhaltungen:
- EP-A- 0 284 708
- EP-A- 0 285 443
- EP-A- 0 318 049
- EP-A- 0 355 446

## Beschreibung

Die vorliegende Erfindung bezieht sich auf ein Verfahren zur Herstellung von überwiegend kristallinen Ethylen-Propylen-Copolymeren verschiedener Molmassenbereiche mit Hilfe von Metallocen-Aluminoxan-Katalysatoren.

Ein Verfahren zur Herstellung von Ethylen-1-Olefincopolymeren mit Hilfe von Metallocen-Aluminoxan-Katalysatoren ist bereits beschrieben worden (vgl. EP 69 951). In diesem Verfahren wird ein gegenüber den genannten Katalysatoren prinzipiell inertes Dispergiermittel wie z.B. Toluol verwendet.

Der Einsatz von Metallocen-Aluminoxan-Katalysatorsystemen in flüssigem Propylen als Dispergiermittel und Monomer ist ebenfalls vorgeschlagen worden (vgl DE 3726 067). Mit diesen Metallocenen und unter den angewandten Bedingungen wird jedoch hochisotaktisches Polypropylen als Polymerisationsprodukt erhalten. Auch eine Voraktivierungsmethode für die Metallocene wird vorgeschlagen, die zu einer Erhöhung der Aktivität der Katalysatoren und zu einer Verbesserung der Kornmorphologie der Polymerisate führt.

Zur Herstellung von hochisotaktischem Polypropylen und von statistischen Propylen-Ethylen-Copolymeren (mit < 15 mol % Ethylen) sind industrielle Produktionsanlagen weit verbreitet, die mit flüssigem Propylen als Dispergiermittel (und Monomer) arbeiten. Bisher war aber kein Verfahren bekannt, in solchen Anlagen auch überwiegend kristalline Ethylen-Propylen-Copolymere (mit < 15 mol % Propylen) herzustellen.

Es wurde nun gefunden, daß eine Herstellung von überwiegend kristallinen Ethylen-Propylen-Copolymeren mit < 15 mol % Gehalt an Propyleneinheiten in flüssigem Propylen als Dispergiermittel möglich ist, wenn Metallocen-Katalysatorkomponenten bestimmter Struktur eingesetzt werden und die Partialdrucke von Ethylen und Propylen in einem bestimmten Verhältnis stehen.

Die Erfindung betrifft somit ein Verfahren zur Herstellung eines Ethylen-Propylen-Copolymers mit einem Gehalt an Propyleneinheiten von weniger als 15 mol %, bezogen auf das Gesamtpolymere, durch Polymerisation von Ethylen und Propylen in einem Suspensionsmittel, bei einer Temperatur von -60 bis 90°C, bei einem Druck von 0,5 bis 150 bar, in Gegenwart eines Katalysators, welcher aus einem Metallocen und einem Aluminoxan der Formel IV 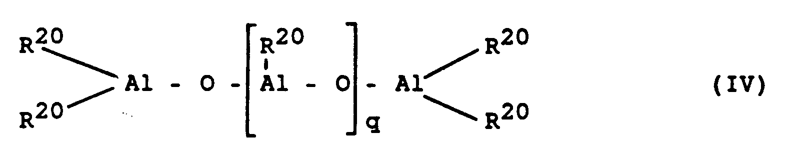
für den linearen Typ und/oder der Formel V 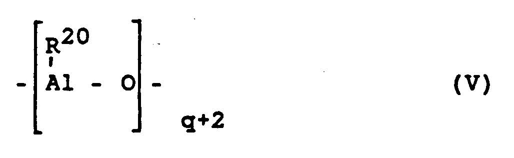
für den cyclischen Typ besteht, wobei in den Formeln IV und V R²⁰ eine C₁-C₆-Alkylgruppe bedeutet und q eine ganze Zahl von 2 bis 50 ist,
dadurch gekennzeichnet, daß die Polymerisation in flüssigem Propylen als Suspensionsmittel durchgeführt wird,
das Verhältnis des Partialdruckes P_{C2} des Ethylens in der Gasphase zum Partialdruck P_{C3} des Propylens in der Gasphase 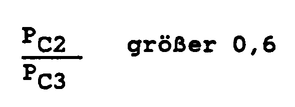
ist und
das Metallocen eine Verbindung der Formeln I, II oder III ist 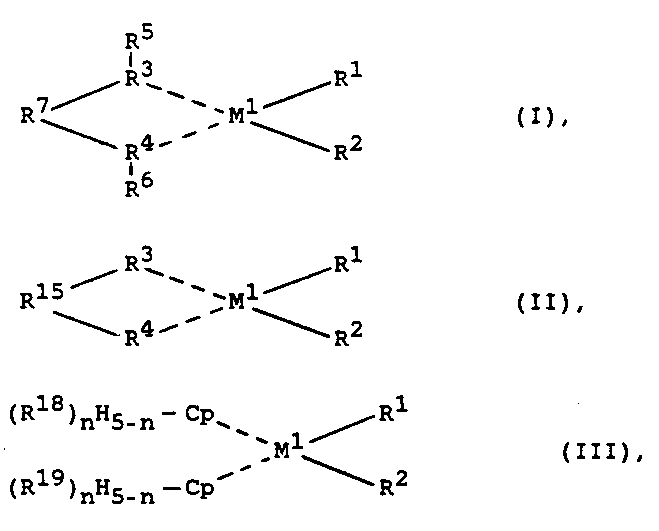
wobei in den Formeln I, II und III
- M¹: ein Metall der Gruppe IVb, Vb oder VIb des Periodensystems ist,
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R³ und R⁴: gleich oder verschieden sind und einen Indenyl- oder Tetrahydroindenylrest bedeuten, wobei die Fünfringe der Reste R³ und R⁴ eine Sandwichstruktur mit dem Zentralatom M¹ bilden,
- R⁵ und R⁶: gleich oder verschieden sind, Substituenten in 3-Stellung von R³ und R⁴ bedeuten und Reste der Formeln 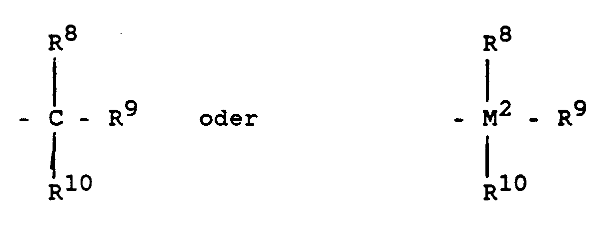 bedeuten,
wobei M² Silizium, Germanium oder Zinn bedeutet, R⁸, R⁹ und R¹⁰ gleich oder verschieden sind und ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe, eine Trihalosilylgruppe, eine C₁-C₁₀-Trialkylsilylgruppe oder eine C₁-C₁₀-Trialkoxysilylgruppe bedeuten,
- R⁷: 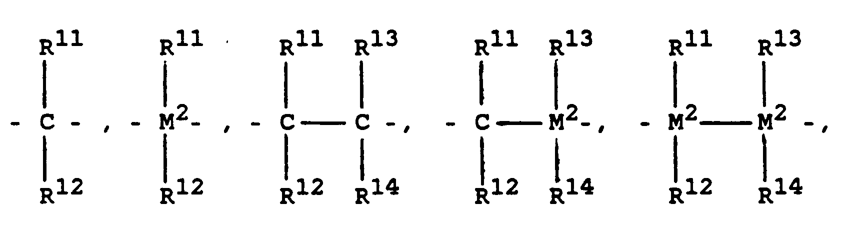 = BR¹¹, = AlR¹¹, -Ge-, -Sn-, -O-, -S-, =S=O, =SO₂, =NR¹¹, =CO, =PR¹¹ oder =P(O)R¹¹ ist
wobei R¹¹, R¹², R¹³ und R¹⁴ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten
und R⁷ mit den Resten R³ und R⁴ einen Ring bildet, wobei die Verknüpfung von R⁷ mit den Resten R³ und R⁴ in der 1-Stellung der Reste R³ und R⁴ erfolgt,
- R¹⁵: 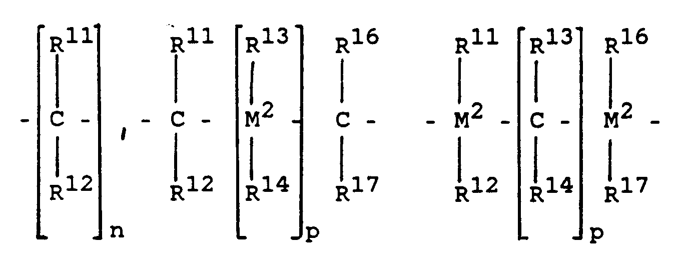 ist, wobei R¹⁶ und R¹⁷ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten,
- n: die Zahlen 3, 4 oder 5 bedeutet und p 1, 2, oder 3 ist, und R¹⁵ mit den Resten R³ und R⁴ einen Ring bildet, wobei die Verknüpfung von R¹⁵ mit den Resten R³ und R⁴ in der 1-Stellung der Reste R³ und R⁴ erfolgt,
- Cp: einen Cyclopentadienylrest bedeutet und
- R¹⁸ und R¹⁹: gleiche oder verschiedene Substituenten an den Cyclopentadienylresten sind und eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten.

Der für das erfindungsgemäße Verfahren zu verwendende Katalysator besteht aus einer Metallocenverbindung der Strukturtypen A, B oder C gemäß den Formeln I, II oder III und einem Aluminoxan.

Diese drei Strukturtypen zeichnen sich durch eine starke sterische Abschirmung des katalytisch wirksamen Übergangsmetall-Zentralatoms aus, die zu einer besonders starken Selektivität des polymerisierenden katalytischen Zentrums gegenüber dem kleinen Monomer Ethylen führt. Hierdurch wird auch bei Gegenwart von flüssigem Propylen (= maximal mögliche Propylenkonzentration) sowie von Ethylen hauptsächlich Ethylen in die Kette eingebaut.

In Formel I, die den Strukturtyp A darstellt, 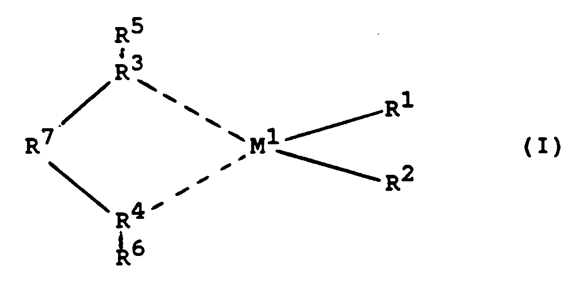
ist M¹ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon und Hafnium.

R¹ und R² sind gleich oder verschieden und bedeuten ein Wasserstoffatom, ein Halogenatom, vorzugsweise Chlor, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe.

R³ und R⁴ sind gleich und verschieden, vorzugsweise gleich, und bedeuten einen Indenyl- oder Tetrahydroindenylrest, wobei die Fünfringe der Reste R³ und R⁴ eine Sandwichstruktur mit dem Zentralatom M¹ bilden.

R⁵ und R⁶ sind gleich oder verschieden, vorzugsweise gleich, und bedeuten Substituenten in 3-Stellung der genannten Fünfringe, die folgende Struktur haben können: 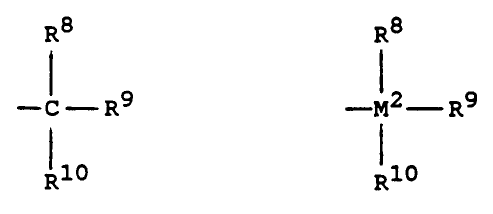
wobei M² Silizium, Germanium oder Zinn bedeutet, vorzugsweise Silizium.
R⁸, R⁹ und R¹⁰ sind gleich oder verschieden, vorzugsweise gleich, und bedeuten ein Halogenatom, eine C₁-C₁₀-Alkylgruppe, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe, eine Trihalosilylgruppe, eine C₁-C₁₀-, vorzugsweise C₁-C₄-Trialkyl-, insbesondere Trimethylsilylgruppe oder eine C₁-C₁₀-, vorzugsweise C₁-C₄-Trialkoxysilylgruppe.

R⁷ ist 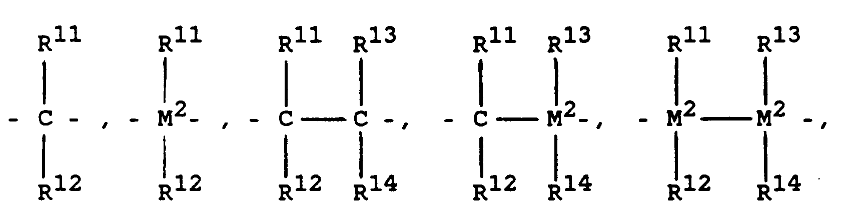
= BR¹¹, = AlR¹¹, -Ge-, -Sn-, -O-, -S-, =S=O, =SO₂, =NR¹¹, =CO, =PR¹¹ oder =P(O)R¹¹,
bevorzugt 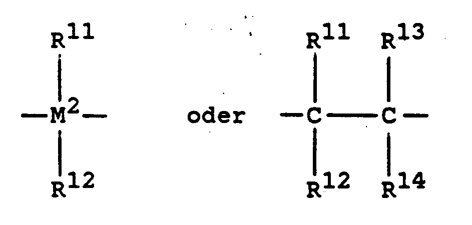
wobei M² die obige Bedeutung hat.

R¹¹, R¹², R¹³ und R¹⁴ sind gleich oder verschieden und bedeuten ein Wasserstoffatom, ein Halogenatom, eine C₁-C₁₀-Alkylgruppe, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe.

R⁷ bildet mit den Resten R³ und R⁴ einen Ring, wobei die Verknüpfung von R⁷ mit den Resten R³ und R⁴ in der 1-Stellung der Reste R³ und R⁴ erfolgt.

Die Metallocene des Strukturtyps A können nach folgendem Reaktionsschema hergestellt werden: 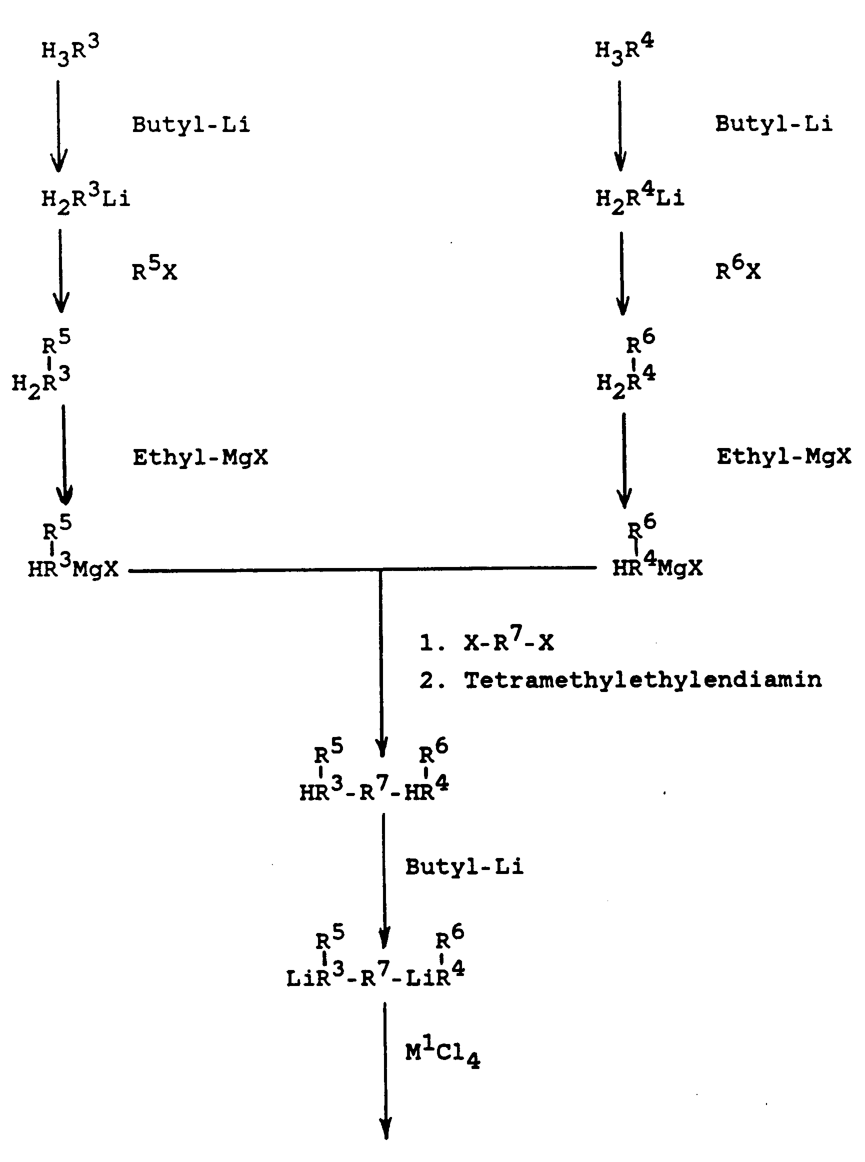 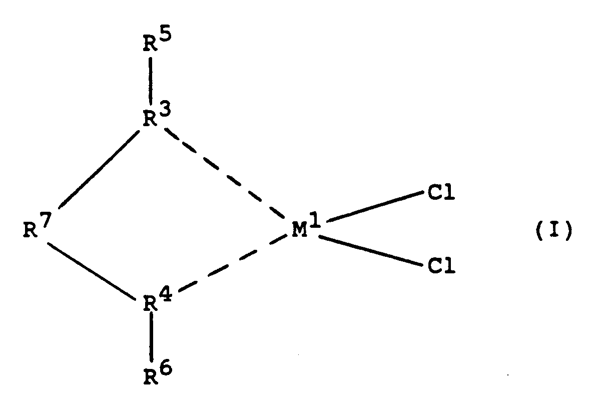
X = Cl, Br, J, O-Tosyl
Statt der beiden Chloratome können auch andere Gruppen R¹ und R² durch bekannte Substitutionsreaktionen eingeführt werden.

Sind R³ und R⁴ Indenylreste, können sie durch Hydrieren der Verbindung (I) nach bekannten Methoden in Tetrahydroindenylrest überführt werden.

Besonders bevorzugtes Metallocen des Strukturtyps A ist Ethylenbis[1-(3-trimethylsilylindenyl)]zirkondichlorid.

In Formel II, die den Strukturtyp B darstellt, 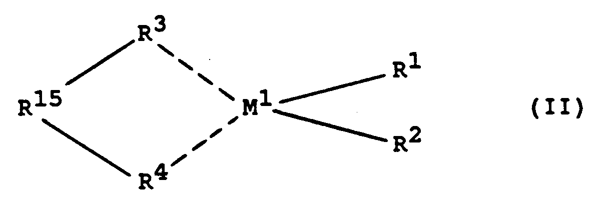
haben M¹, R¹, R², R³ und R⁴ die obengenannte Bedeutung.

R¹⁵ ist 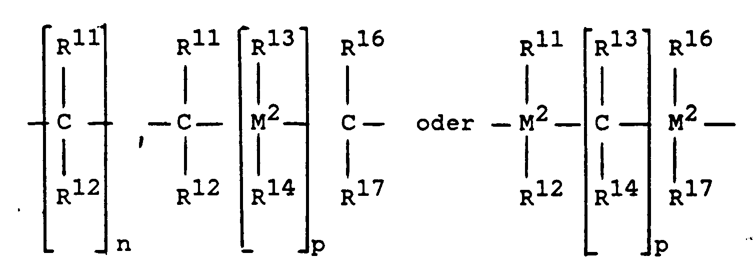
wobei M², R¹¹, R¹², R¹³ und R¹⁴ die vorgenannte Bedeutung und R¹⁶ und R¹⁷ die Bedeutung von R¹¹, R¹², R¹³ oder R¹⁴ haben.

n ist 3, 4 oder 5 und p ist 1, 2 oder 3.

R¹⁵ bildet mit den Resten R³ und R⁴ einen Ring, wobei die Verknüpfung von R¹⁵ mit R³ und R⁴ in der 1-Stellung der Reste R³ und R⁴ erfolgt.

Die Metallocene des Strukturtyps B können nach folgendem Reaktionsschema hergestellt werden: 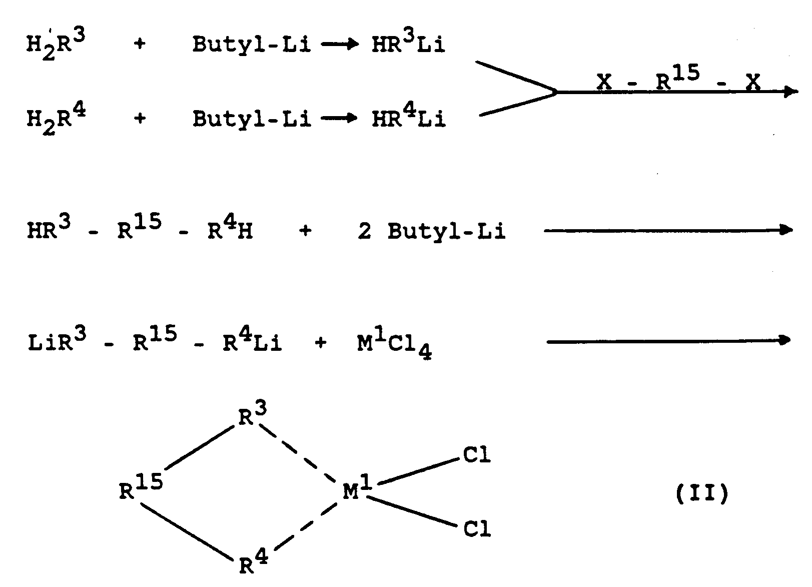
X = Cl, Br, J, O-Tosyl.

Statt der beiden Chloratome können auch andere Gruppen R¹ und R² durch bekannte Substitutionsreaktionen eingeführt werden.

Sind R³ und R⁴ Indenylreste so können sie durch Hydrieren der Verbindung (II) nach bekannten Methoden in Tetrahydroindenylreste überführt werden.

Besonders bevorzugtes Metallocen des Strukturtyps B ist Propylenbis(1-indenyl)zirkondichlorid.

In Formel III, die den Strukturtyp C darstellt, 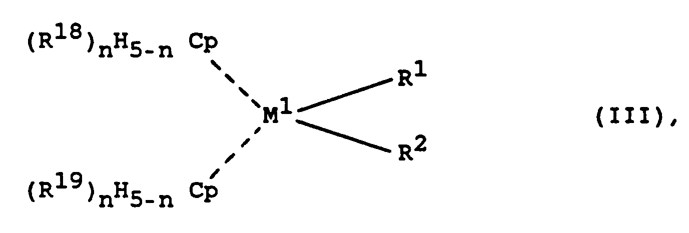
haben M¹, R¹ und R² de bereits genannte Bedeutung.

Cp bedeutet einen Cyclopentadienylrest,
n bedeutet die Zahlen 3, 4 oder 5.

R¹⁸ und R¹⁹ sind gleiche oder verschiedene, vorzugsweise gleiche Reste an den Cyclopentadienylringen und bedeuten ein Halogenatom, eine C₁-C₁₀-Alkylgruppe, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe.

Die Synthese von Metallocenen des Strukturtyps C kann nach Methoden erfolgen, die in der Literatur beschrieben sind, z.B. in: J.M. Manriquez, D.R. Mc Alister, E. Rosenberg, A.M. Shiller, K.L. Williamson, S.I. Chan, J.E. Bercaw J. Amer.Chem. Soc. 100, 3078 (1978).

Besonders bevorzugtes Metallocen des Strukturtyps C ist Bis(pentamethylcyclopentadienyl)zirkondichlorid.

Neben dem Metallocen enthält das erfindungsgemäß zu verwendende Katalysatorsystem noch eine Aluminiumalkylverbindung als Aktivator. Dieser Aktivator ist ein Aluminoxan der Formel IV 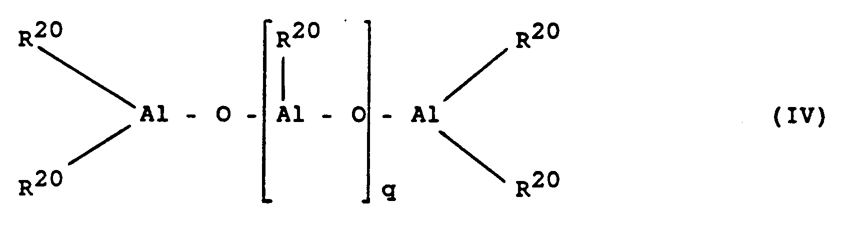
für den linearen Typ und/oder der Formel V 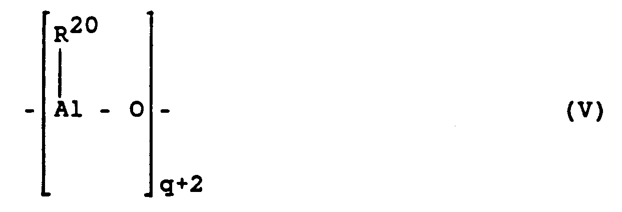
für den cyclischen Typ. In diesen Formeln bedeuten R²⁰ eine C₁-C₆-Alkylgruppe, vorzugsweise Methyl, Ethyl oder Isobutyl, insbesondere Methyl, und q eine ganze Zahl von 2 bis 50, bevorzugt 10 bis 40. Die exakte Struktur des Aluminoxans ist jedoch nicht gesichert.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20°C mit soviel Aluminiumtrialkyl versetzt, daß für je 4 Al-Atome etwa 1 mol CuSO₄·5H₂O zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung unter Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(SO₄)₃.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind.

Es ist möglich, das Metallocen vor dem Einsatz in der Polymerisationsreaktion mit einem Aluminoxan der Formel IV und/oder V vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet. Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Das erfindungsgemäß zu verwendende Katalysatorsystem wird zur Copolymerisation von Ethylen mit Propylen und gegebenenfalls einem weiteren 1-Olefin mit 4 bis 18 C-Atomen, z.B. Buten-(1), Hexen-(1), 4-Methylpenten-(1), Octen-(1) eingesetzt.

Die Polymerisation wird in flüssigem Propylen kontinuierlich oder diskontinuierlich, ein- oder mehrstufig bei einer Temperatur von -60°C bis 90°C, bevorzugt 20°C bis 70°C durchgeführt. Ethylen wird der Polymerisation in einer Menge zugeführt, daß sich über der Flüssigphase ein Partialdruckverhältnis P_{C2}/P_{C3} > 0,6, bevorzugt > 0,9 einstellt (P_{C2} = Partialdruck des Ethylens in der Gasphase über der Suspension; P_{C3} = Partialdruck des Propylens in der Gasphase über der Suspension). Der Gesamtdruck beträgt 0,5 bis 150, vorzugsweise 14,5 bis 120 bar.

Dabei wird die Metallocenverbindung üblicherweise in einer Konzentration, bezogen auf das Übergangsmetall, von 10⁻³ bis 10⁻⁸, vorzugsweise 10⁻⁴ bis 10⁻⁷ mol Übergangsmetall pro dm³ flüssiges Propylen angewendet. Das Aluminoxan wird üblicherweise in einer Konzentration von 10⁻⁴ bis 10⁻¹ mol, vorzugsweise 10⁻³ bis 10⁻² mol pro dm³ flüssiges Propylen verwendet. Prinzipiell sind aber auch höhere Konzentrationen möglich.

Die Molmasse des Polymerisats kann in bekannter Weise geregelt werden; vorzugsweise wird dazu Wasserstoff verwendet.

Das erfindungsgemäße Verfahren steigert die Vielseitigkeit der Verwendung von Anlagen, in denen im flüssigen Propylen polymerisiert werden kann. Je nach Propylenanteil im Polymeren und der dadurch beeinflußten Dichte der Produkte werden die überwiegend kristallinen Ethylen-Propylen-Copolymeren als "HDPE" ("High Density Poly-Ethylene"), "MDPE" ("Medium Density Poly-Ethylene") und "LLDPE" ("Linear Low Density Poly-Ethylene") erhalten. Durch Einsatz von Molmassenreglern können beim erfindungsgemäßen Verfahren auch niedermolekulare Ethylen-Propylen-Copolymere erhalten werden, die man als Polyethylenwachse ("HDPE"-, "MDPE"- und "LLDPE"-Wachse) bezeichnen kann. Auch die Herstellung von Ethylen-Propylen-1-Olefin-Terpolymeren ist nach dem erfindungsgemäßen Verfahren möglich.

Die nachfolgenden Beispiele sollen die Erfindung erläutern.

Es bedeuten
- VZ: = Viskositätszahl in cm³/g,
- M_{w}: = Molmassengewichtsmittel in g/mol,
- M_{w}/Mₙ: = Molmassenverteilung ermittelt durch Gelpermeationschromatographie (GPC)

Die Angaben von Drucken in den Beispielen sind in bar Überdruck.

Die Propylengehalte der Polymeren sind durch ¹³C-NMR-Spektroskopie, die Kristallinitäten als relative Kristallinitäten durch IR-Spektroskopie bestimmt worden.

Der Schmelzindex MFI 190/2,16 ist nach DIN 53735, die Dichte nach DIN 53479, Verfahren A, bestimmt worden.

Die Schmelzpunkte sind durch DSC-Messungen ermittelt worden.

### Beispiel 1

In diesem Beispiel wurde als Metallocen das Ethylenbis[1-(3-trimethylsilylindenyl)]zirkondichlorid eingesetzt. Diese Verbindung kann als chirales Isomeres (in Form einer racemischen Mischung zweier optisch aktiver Enantiomerer) oder als nicht chirales meso-Isomeres vorliegen. Das verwendete Präparat hatte ein Verhältnis von Racemat zu meso-Form wie 3,5 : 1.

Ein trockener 70 dm³-Kessel wurde zunächst mit Stickstoff, dann mit Ethylen gespült und danach mit 40 dm³ flüssigem Propylen befüllt. Dann wurden 80 cm³ toluolische Methylaluminoxanlösung (entsprechend 114 mmol Al, mittlerer Oligomerisierungsgrad n = 17) zugegeben und der Ansatz bei 30°C 15 Minuten gerührt. Danach wurde die Temperatur auf 55°C erhöht, wodurch sich in der Gasphase über der Flüssigkeit ein Druck von 21,9 bar einstellte. Durch Zuführen von Ethylen wurde ein Gesamtdruck von 45 bar eingestellt. Das Partialdruckverhältnis P_{C2}/P_{C3} war damit 1,05.
Parallel dazu wurden 8,0 mg Metallocen in 30 cm³ toluolischer Methylaluminoxanlösung (43 mmol Al) gelöst und durch 15-minütiges Stehenlassen voraktiviert. Die Lösung wurde dann in den Kessel gegeben und damit die Polymerisation gestartet. Der Ansatz wurde 90 Minuten bei 55°C polymerisiert, wobei der Gesamtdruck im Kessel durch kontinuierliches Einspeisen von Ethylen stets bei 45 bar gehalten wurde.
Danach wurde die Polymerisation durch Zugabe von Isopropanol gestoppt. Man erhielt 6,2 kg Polymerisat. Das Produkt fiel in Form eines grobkörnigen Pulvers an, das eine Schüttdichte von 0,35 g/cm³ und die folgende durch Sieben bestimmte Korngrößenverteilung aufwies:

| Korngröße (µm) | Anteil (Gew.-%) | Summe (Gew.-%) |
|---|---|---|
| < 100 | 2,1 | 2,1 |
| 100 - 200 | 7,5 | 9,6 |
| 200 - 300 | 17,5 | 27,1 |
| 300 - 400 | 14,8 | 41,9 |
| 400 - 500 | 11,4 | 53,3 |
| 500 - 630 | 13,2 | 66,5 |
| 630 - 800 | 12,4 | 78,9 |
| 800 - 1000 | 11,4 | 90,3 |
| > 1000 | 9,7 | 100,0 |

Desweiteren wurden an dem Ethylen-Propylen-Copolymeren folgende Werte bestimmt: VZ = 166 cm³/g
M_{w} = 79000 g/mol, M_{w}/Mₙ = 35,8
MFI 190/2,16 = 8,03 g/10 min
Propylengehalt: 7,7 mol %
Kristallinität: 53 %
Dichte: 0,921 g/cm³
Schmelzpunkt: 109,1°C

### Beispiel 2

In diesem Beispiel wurde das gleiche Metallocen wie in Beispiel 1 eingesetzt.

Ein trockener 70 dm³-Kessel wurde zunächst mit Stickstoff, danach mit Ethylen gespült und dann mit 40 dm³ flüssigem Propylen befüllt. 60 cm³ toluolische Methylaluminoxanlösung (entsprechend 86 mmol Al, mittlerer Oligomerisierungsgrad n = 17) wurden zugegeben und der Ansatz bei 30°C 15 Minuten gerührt. Danach wurde die Temperatur auf 51°C erhöht, wodurch sich in der Gasphase über der Flüssigkeit ein Druck von 20,1 bar einstellte. Durch Zuführen von Wasserstoff wurde ein Gesamtdruck von 22,1 bar eingestellt, darauf durch Zuführen von Ethylen ein Gesamtdruck von 50 bar. Das Partialdruckverhältnis P_{C2}/P_{C3} war damit 1,39.

Parallel dazu wurden 5,3 mg Metallocen in 20 cm³ toluolischer Methylaluminoxanlösung (28 mmol Al) gelöst und durch 15-minütiges Stehenlassen voraktiviert. Die Lösung wurde in den Kessel gegeben und damit die Polymerisation gestartet. Die Polymerisation dauerte 60 min. bei 51°C, wobei der Gesamtdruck im Kessel durch kontinuierliches Einspeisen von Ethylen stets bei 50 bar gehalten wurde. Danach wurde die Polymerisation durch Zugabe von Isopropanol gestoppt. Man erhielt 2,1 kg Polymerisat. Das Produkt fiel in Form eines grobkörnigen Pulvers aus kugelförmigen Partikeln an, welches eine Schüttdichte von 0,47 g/cm³ und die folgende durch Sieben bestimmte Korngrößenverteilung aufwies:

| Korngröße (µm) | Anteil (Gew.-%) | Summe (Gew.-%) |
|---|---|---|
| < 100 | 0,8 | 0,8 |
| 100 - 200 | 3,1 | 3,9 |
| 200 - 300 | 7,7 | 11,6 |
| 300 - 400 | 5,5 | 17,1 |
| 400 - 500 | 9,5 | 26,6 |
| 500 - 630 | 16,4 | 43,0 |
| 630 - 800 | 20,5 | 63,5 |
| 800 - 1000 | 22,0 | 85,5 |
| > 1000 | 14,5 | 100,0 |

Weiterhin wurden an dem oben erhaltenen Copolymerwachs folgende Werte bestimmt: VZ = 63 cm³/g
M_{w} = 10090 g/mol, M_{w}/Mₙ = 20,1
Propylengehalt: 7,0 mol %
Kristallinität: 52 %
Dichte: 0,903 g/cm³

Das Produkt hatte keinen einheitlichen Schmelzpunkt, die DSC-Kurve zeigte Peaks bei 88°C, 101°C und 114°C.

### Beispiel 3

In diesem Beispiel wurde das gleiche Metallocen wie in Beispiel 1 eingesetzt.

Ein trockener 70 dm³-Kessel wurde zunächst mit Stickstoff, danach mit Ethylen gespült und dann mit 40 dm³ flüssigem Propylen befüllt. 50 cm³ toluolische Methylaluminoxanlösung (entsprechend 72 mmol Al, mittlerer Oligomerisierungsgrad n = 17) wurden zugegeben und der Ansatz bei 30°C 15 Minuten gerührt. Danach wurde die Temperatur auf 65°C erhöht, wodurch sich in der Gasphase über der Flüssigkeit ein Druck von 26,8 bar einstellte. Danach wurde durch Zuführen von Wasserstoff ein Gesamtdruck von 28,3 bar eingestellt, darauf durch Zuführen von Ethylen ein Gesamtdruck von 46 bar. Das Partialdruckverhältnis P_{C2}/P_{C3} war damit 0,66.

Parallel dazu wurden 10,3 mg Metallocen in 20 cm³ toluolischer Methylaluminoxanlösung (29 mmol Al) gelöst und durch 15-minütiges Stehenlassen voraktiviert. Die Lösung wurde in den Kessel gegeben und damit die Polymerisation gestartet. Die Polymerisation dauerte 60 min bei 65°C, wobei der Gesamtdruck im Kessel durch kontinuierliches Einspeisen von Ethylen stets bei 46 bar gehalten wurde. Dann wurde die Polymerisation durch Zugabe von Isopropanol gestoppt. Man erhielt 1,9 kg Ethylen-Propylen-Copolymerwachs. Das Produkt fiel in Form eines grobkörnigen, leicht klebrigen Pulvers mit der Schüttdichte 0,45 g/cm³ an.
Desweiteren wurden an dem Polymeren folgende Werte bestimmt:
VZ = 30 cm³/g
Propylengehalt: 12,2 mol %
Kristallinität: 51 %

### Beispiel 4

In diesem Beispiel wurde Propylenbis(1-indenyl) zirkondichlorid als Metallocen eingesetzt.

Ein trockener 15 dm³-Kessel wurde zunächst mit Stickstoff, danach mit Ethylen gespült und dann mit 10 dm³ flüssigem Propylen befüllt. 30 cm³ toluolische Methylaluminoxanlösung (entsprechend 46 mmol Al, mittlerer Oligomerisierungsgrad n = 22) wurden zugegeben und der Ansatz bei 30°C 15 Minuten gerührt. Der Druck in der Gasphase über der Flüssigkeit stellte sich auf 12,2 bar ein. Dann wurde durch Zuführen von Ethylen ein Gesamtdruck von 33 bar eingestellt, das Partialdruckverhältnis P_{C2}/P_{C3} war damit 1,7.

Parallel dazu wurden 1,6 mg Metallocen in 20 cm³ toluolischer Methylaluminoxanlösung (31 mmol Al) gelöst und durch 15 minütiges Stehenlassen voraktiviert. Die Lösung wurde in den Kessel gegeben und damit die Polymerisation gestartet. Die Polymerisation dauerte 70 Minuten bei 30°C, wobei der Gesamtdruck im Kessel durch kontinuierliches Einspeisen von Ethylen stets bei 33 bar gehalten wurde. Danach wurde die Polymerisation durch Entspannen des Reaktors gestoppt. Man erhielt 0,08 kg Polymeres als flockiges Pulver.

An dem Polymeren wurden folgende Werte bestimmt:
Propylengehalt: 8,5 mol %
Kristallinität: 54 %
VZ = 380 cm³/g
M_{w} = 277000 g/mol
M_{w}/Mₙ = 10,2
MFI 190/5 = 16,5 g/10 min

### Beispiel 5

In diesem Beispiel wurde 1,1,4,4-Tetramethyl-1,4 disilabutylenbis(1′-indenyl)zirkondichlorid als Metallocen eingesetzt. Die Verbindung lag zu 95 % in Form der racemischen Mischung der chiralen Enantiomeren vor.

Es wurde analog Beispiel 4 verfahren, man setzte allerdings 2,2 mg Metallocen ein.
Man erhielt 0,07 kg Polymeres als flockiges Pulver.

An dem Polymeren wurden folgende Werte bestimmt:
VZ = 310 cm³/g
Propylengehalt: 10,3 mol %
Kristallinität: 52 %

### Beispiel 6

In diesem Beispiel wurde 2,2-Dimethyl-2-silapropylenbis(1′-indenyl)hafniumdichlorid als Metallocen eingesetzt.

Es wurde analog Beispiel 4 verfahren, man setzte allerdings 5,1 mg Metallocen ein.
Man erhielt 0,10 kg Polymeres als flockiges Pulver.

An dem Polymeren wurden folgende Werte bestimmt:
VZ = 350 cm³/g
Propylengehalt: 9,8 mol %
Kristallinität: 54 %

### Beispiel 7

In diesem Beispiel wurde als Metallocen das Bis(pentamethylcyclopentadienyl)zirkondichlorid eingesetzt.

Ein trockener 70 dm³-Kessel wurde zunächst mit Stickstoff, danach mit Ethylen gespült und dann mit 40 dm³ flüssigem Propylen befüllt. 60 cm³ toluolische Methylaluminoxanlösung (entsprechend 89 mmol Al, mittlerer Oligomerisierungsgrad n = 19) wurden zugegeben und der Ansatz bei 30°C 15 Minuten gerührt. Dann wurde die Temperatur auf 45°C erhöht, wodurch sich in der Gasphase über der Flüssigkeit ein Druck von 17,6 bar einstellte. Durch Zuführen von Ethylen wurde ein Gesamtdruck von 50 bar eingestellt. Das Partialdruckverhältnis P_{C2}/P_{C3} war damit 1,84.

Parallel dazu wurden 5,0 mg Metallocen in 60 cm³ toluolischer Methylaluminoxanlösung (89 mmol Al) gelöst und durch 15-minütiges Stehenlassen voraktiviert. Die Lösung wurde dann in den Kessel gegeben und damit die Polymerisation gestartet. Die Polymerisation dauerte 80 Minuten bei 45°C, wobei der Gesamtdruck im Kessel durch kontinuierliches Einspeisen von Ethylen stets bei 40 bar gehalten wurde. Danach wurde die Polymerisation durch Zugabe von Isopropanol gestoppt. Man erhielt 1,9 kg Ethylen-Propylen-Copolymeres. Das Produkt fiel in Form eines Pulvers mit der Schüttdichte 0,2 g/cm³ an. Desweiteren wurden an dem Polymeren folgende Werte bestimmt.
VZ = 142 cm³/g
M_{w} = 200000 g/mol, M_{w}/Mₙ = 6,5
Propylengehalt: 3,5 mol %
Kristallinität: 57 %
Dichte: 0,940 g/cm³

## Patentansprüche

1. Verfahren zur Herstellung eines Ethylen-Propylen-Copolymers mit einem Gehalt an Propyleneinheiten von weniger als 15 mol %, bezogen auf das Gesamtpolymere, durch Polymerisation von Ethylen und Propylen in einem Suspensionsmittel bei einer Temperatur von -60 bis 90°C, bei einem Druck von 0,5 bis 150 bar, in Gegenwart eines Katalysators, welcher aus einem Metallocen und einem Aluminoxan der Formel IV 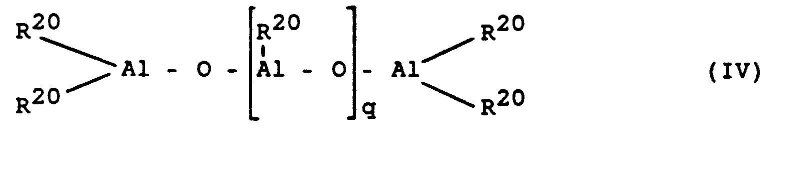 für den linearen Typ und/oder der Formel V 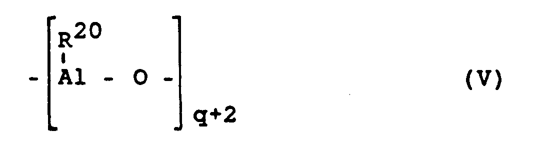 für den cyclischen Typ besteht, wobei in den Formeln IV und V R²⁰ eine C₁-C₆-Alkylgruppe bedeutet und q eine ganze Zahl von 2 bis 50 ist, dadurch gekennzeichnet, daß die Polymerisation in flüssigem Propylen als Suspensionsmittel durchgeführt wird,
das Verhältnis des Partialdruckes P_{C2} des Ethylens in der Gasphase zum Partialdruck P_{C3} des Propylens in der Gasphase 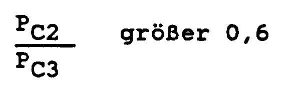 ist und das Metallocen eine Verbindung der Formeln I, II oder III ist 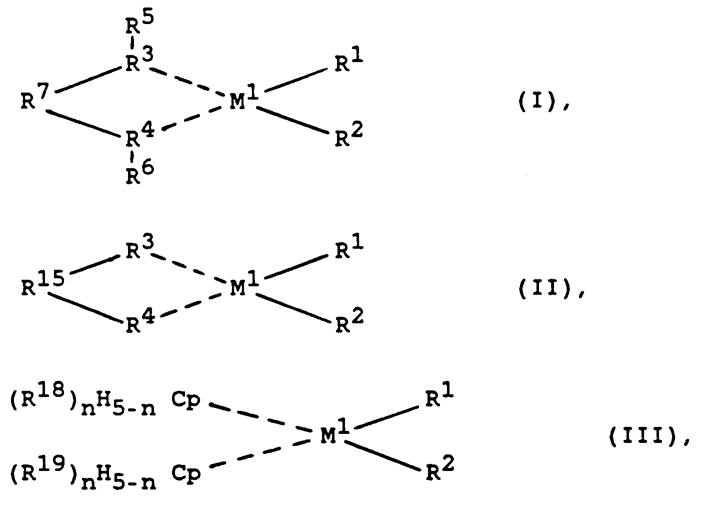 wobei in den Formeln I, II und III
M¹ ein Metall der Gruppe IVb, Vb oder VIb des Periodensystems ist,
R¹ und R² gleich oder verschieden sind und in Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und einen Indenyl- oder Tetrahydroindenylrest bedeuten, wobei die Fünfringe der Reste R³ und R⁴ eine Sandwichstruktur mit dem Zentralatom M¹ bilden,
R⁵ und R⁶ gleich oder verschieden sind, Substituenten in 3-Stellung von R³ und R⁴ sind und Rest der Formeln 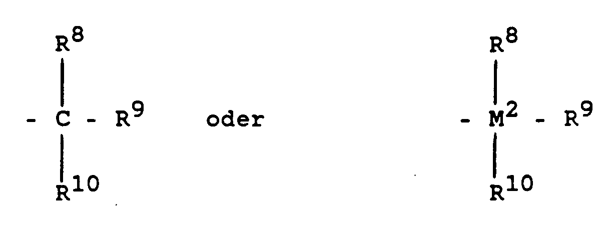 bedeuten,
wobei M² Silizium, Germanium oder Zinn bedeutet, R⁸, R⁹ und R¹⁰ gleich oder verschieden sind und ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe, eine Trihalosilylgruppe, eine C₁-C₁₀-Trialkylsilylgruppe oder eine C₁-C₁₀-Trialkoxysilylgruppe bedeuten,
R⁷ 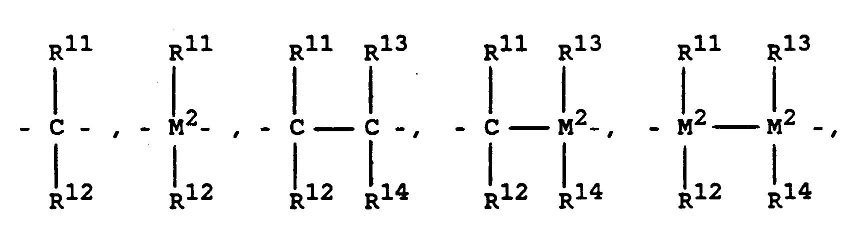 = BR¹¹, = AlR¹¹, -Ge-, -Sn-, -O-, -S-, =S=O, =SO₂, =NR¹¹, =CO, =PR¹¹ oder =P(O)R¹¹ ist,
wobei R¹¹, R¹², R¹³ und R¹⁴ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten,
und R⁷ mit den Resten R³ und R⁴ einen Ring bildet, wobei die Verknüpfung von R⁷ mit den Resten R³ und R⁴ in der 1-Stellung der Reste R³ und R⁴ erfolgt,
R¹⁵ 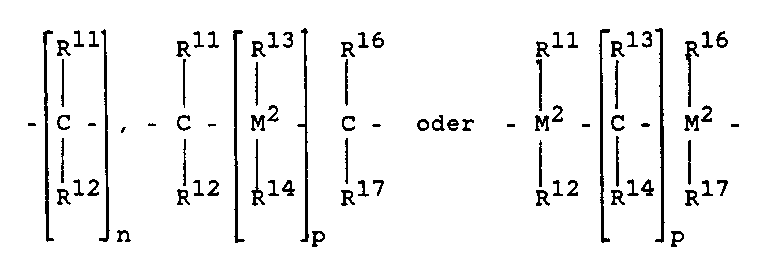 ist, wobei R¹⁶ und R¹⁷ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten,
n die Zahlen 3, 4 oder 5 bedeutet und p 1, 2, oder 3 ist,
R¹⁵ mit den Resten R³ und R⁴ einen Ring bildet, wobei die Verknüpfung von R¹⁵ mit den Resten R³ und R⁴ in der 1-Stellung der Reste R³ und R⁴ erfolgt,
Cp einen Cyclopentadienylrest bedeutet und
R¹⁸ und R¹⁹ gleiche oder verschiedene Substituenten an den Cyclopentadienylresten sind und eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten.

2. Verfahren nach Anspruch 1, dadurch gekennzeichnet, daß die Polymerisation in Gegenwart eines 1-Olefins mit 4 bis 18 C-Atomen durchgeführt wird.

3. Verfahren nach Anspruch 1, dadurch gekennzeichnet, daß das Metallocen Ethylenbis[1-(3-trimethylsilylindenyl)]zirkondichlorid ist.

4. Verfahren nach Anspruch 1, dadurch gekennzeichnet, daß das Metallocen Propylenbis(1-indenyl)zirkondichlorid ist.

5. Verfahren nach Anspruch 1, dadurch gekennzeichnet, daß das Metallocen Bis(pentamethylcyclopentadienyl)zirkondichlorid ist.

## Claims

1. A process for the preparation of an ethylene/propylene copolymer containing less than 15 mol% of propylene units, relative to the entire polymer, by polymerization of ethylene and propylene in a suspending agent, at a temperature of -60 to 90°C, at a pressure of 0.5 to 150 bar, in the presence of a catalyst which consists of a metallocene and an aluminoxane of the formula IV 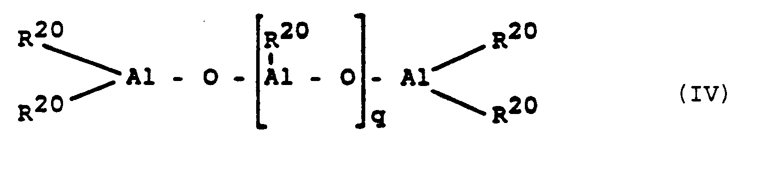 in the case of the linear type and/or of the formula V 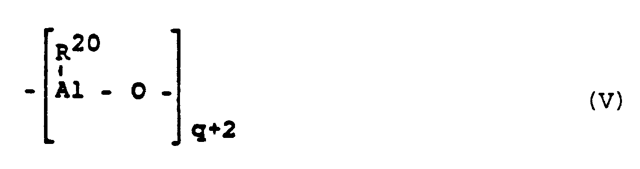 in the case of the cyclic type, in which in formulae IV and V R²⁰ is a C₁-C₆-alkyl group and q is an integer from 2 to 50, which comprises carrying out the polymerization in liquid propylene as suspending agent, in which the ratio of the partial pressure P_{C2}, of ethylene in the gas phase to the partial pressure P_{C3} of propylene in the gas phase 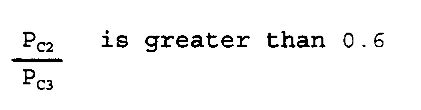 and the metallocene is a compound of the formula I, II or III 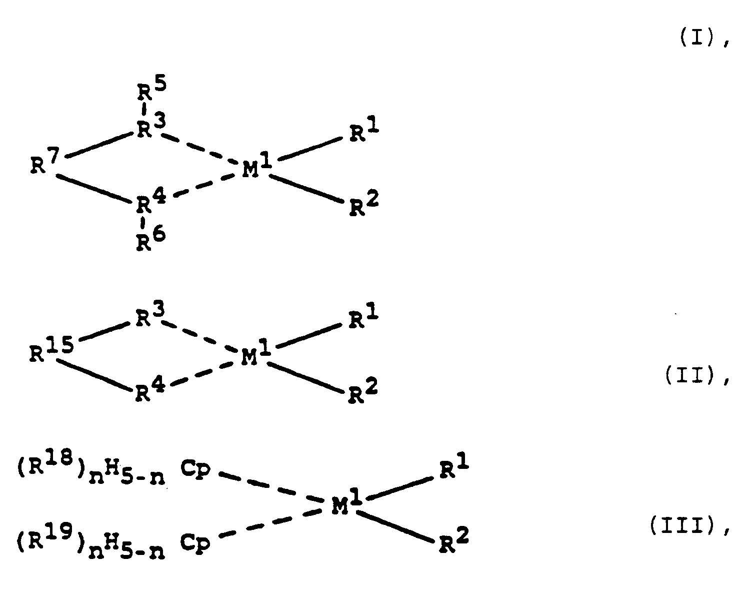 in which in formulae I, II and III
M¹ is a metal from group IVb, Vb or VIb of the periodic table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are an indenyl or tetrahydroindenyl radical in which the five-membered rings of the radicals R³ and R⁴ form a sandwich structure with the central atom M¹,
R⁵ and R⁶ are identical or different, and are substituents in the 3-position of R³ and R⁴ or are radicals of the formula 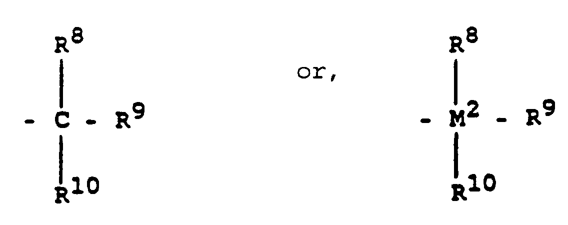 in which M² is silicon, germanium or tin, R⁸, R⁹ and R¹° are identical or different and are a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group, a C₇-C₄₀-alkylaryl group, a trihalosilyl group, a C₁-C₁₀-trialkylsilyl group or a C₁-C₁₀-trialkoxysilyl group,
R⁷ is 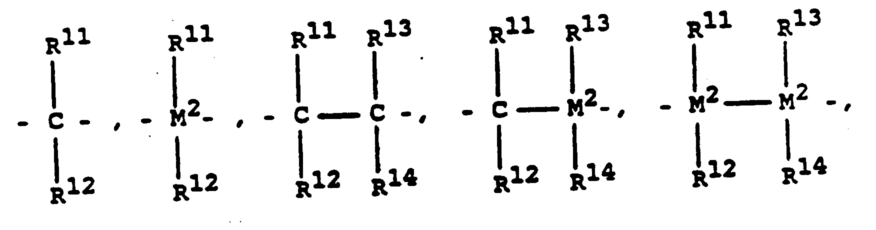 =BR¹¹, =AlR¹¹, -Ge-, -Sn-, -O-, -S-, =S=O, =SO₂, =NR¹¹, =CO, =PR¹¹ or =P(O)R¹¹,
where R¹¹, R¹², R¹³ and R¹⁴ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group, or a C₇-C₄₀-alkylaryl group
and R⁷ together with the radicals R³ and R⁴ forms a ring, R⁷ being linked to the radicals R³ and R⁴ in the 1-position of the radicals R³ and R⁴,
R¹⁵ is 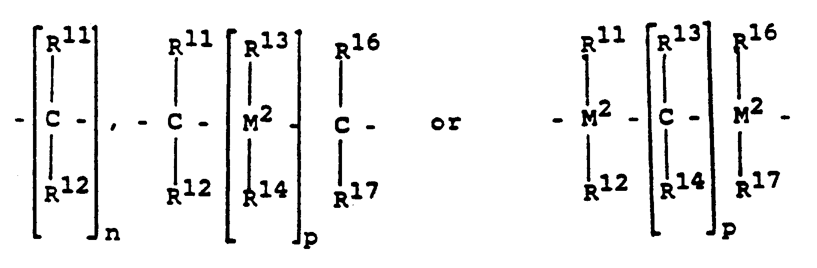 in which R¹⁶ and R¹⁷ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group,
n is the number 3, 4 or 5 and p is 1, 2 or 3,
R¹⁵ together with the radicals R³ and R⁴ forms a ring, R¹⁵ being linked to the radicals R³ and R⁴ in the 1-position of the radicals R³ and R⁴,
Cp is a cyclopentadienyl radical and
R¹⁸ and R¹⁹ are identical or different substituents on the cyclopentadienyl radicals and are a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom.

2. The process as claimed in claim 1, wherein the polymerization is carried out in the presence of a 1-olefin having 4 to 18 carbon atoms.

3. The process as claimed in claim 1, wherein the metallocene is ethylenebis[1-(3-trimethylsilylindenyl)]zirconium dichloride.

4. The process as claimed in claim 1, wherein the metallocene is propylenebis(1-indenyl)zirconium dichloride.

5. The process as claimed in claim 1, wherein the metallocene is bis(pentamethylcyclopentadienyl)zirconium dichloride.

## Revendications

1. Procédé pour la préparation d'un copolymère éthylène/propylène ayant une teneur en motifs propylène de moins de 15 % en moles, par rapport au polymère total, par polymérisation d'éthylène et de propylène dans un milieu de mise en suspension, à une température de -60 à 90°C, sous une pression de 0,5 à 150 bars, en présence d'un catalyseur qui est constitué d'un métallocène et d'un aluminoxane de formule IV 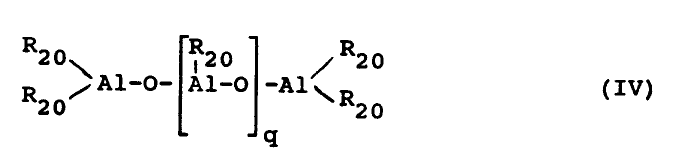 pour le type linéaire et/ou de formule V 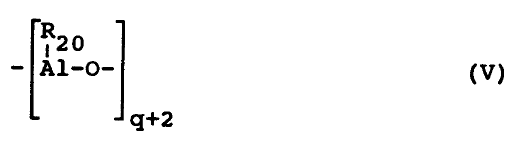 pour le type cyclique, dans les formules IV et V, R₂₀ représentant un groupe alkyle en C₁-C₆ et q étant un nombre entier allant de 2 à 50, caractérisé en ce que la polymérisation est effectuée dans du propylène liquide en tant que milieu de mise en suspension,
le rapport de la pression partielle P_{C2} de l'éthylène dans la phase gazeuse à la pression partielle P_{C3} du propylène dans la phase gazeuse est 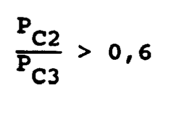 et le métallocène est un composé de formules I, II ou III 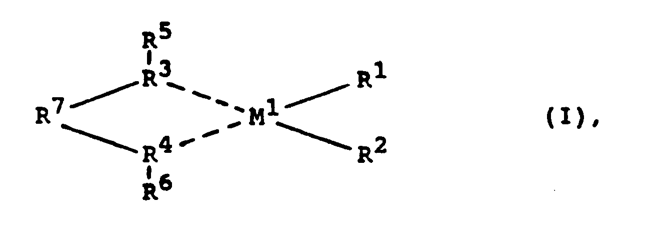 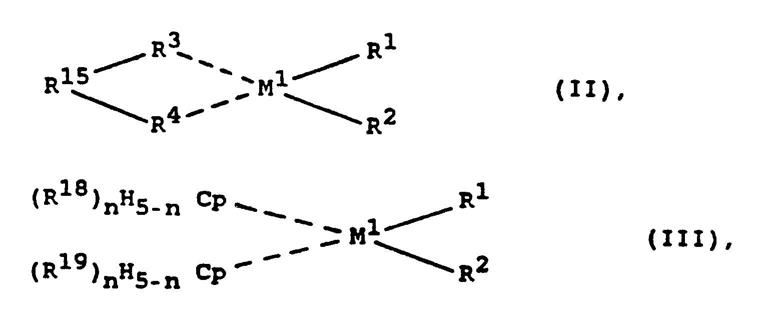 formules I, II et III dans lesquelles
M¹ est un métal du groupe IVb, Vb ou VIb du système périodique,
R¹ et R² sont identiques ou différents et représentent un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène,
R³ et R⁴ sont identiques ou différents et représentent un radical indényle ou tétrahydroindényle, les cycles pentagonaux des radicaux R³ et R⁴ formant une structure sandwich avec l'atome central M¹,
R⁵ et R⁶ sont identiques ou différents, sont des substituants en position 3 de R³ et R⁴ et représentent des radicaux de formule 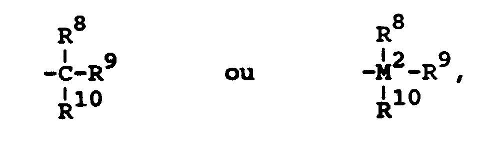 M² représentant le silicium, le germanium ou l'étain, R⁸, R⁹ et R¹⁰ étant identiques ou différents et représentant un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀, un groupe alkylaryle en C₇-C₄₀, un groupe trihalogénosilyle, un groupe trialkyl(C₁-C₁₀)-silyle ou un groupe trialcoxy(C₁-C₁₀)-silyle,
R⁷ représente 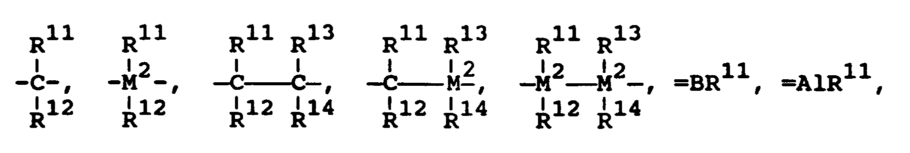 -Ge-, -Sn-, -O-, -S-, =S=O, =SO₂, =NR¹¹, =CO, =PR¹¹ ou =P(O)R¹¹,
R¹¹, R¹², R¹³ et R¹⁴ étant identiques ou différents et représentant un atome d'hydrogène, un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀,
et R⁷ forme un cycle avec les radicaux R³ et R⁴, la liaison de R⁷ avec les radicaux R³ et R⁴ s'effectuant en position 1 des radicaux R³ et R⁴,
R¹⁵ représente 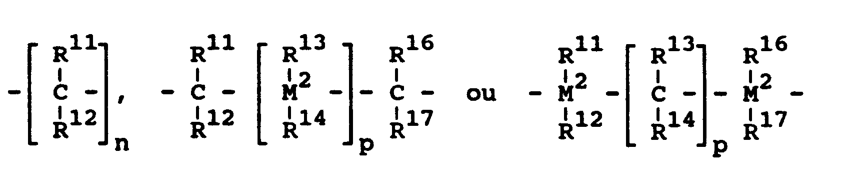 R¹⁶et R¹⁷ étant identiques ou différents et représentant un atome d'hydrogène, un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀,
n représente les nombres 3, 4 ou 5, et p est 1, 2 ou 3,
R¹⁵ forme un cycle avec les radicaux R³ et R⁴, la liaison de R¹⁵ avec les radicaux R³ et R⁴ s'effectuant en position 1 des radicaux R³ et R⁴,
Cp représente un radical cyclopentadiényle et
R¹⁸ et R¹⁹ sont des substituants identiques ou différents sur le radical cyclopentadiényle, et représentent un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène.

2. Procédé selon la revendication 1, caractérisé en ce que la polymérisation est effectuée en présence d'une 1-oléfine ayant de 4 à 18 atomes de carbone.

3. Procédé selon la revendication 1, caractérisé en ce que le métallocène est le dichlorure d'éthylène-bis[1-(3-triméthylsilylindényl)]zirconium.

4. Procédé selon la revendication 1, caractérisé en ce que le métallocène est le dichlorure de propylène-bis(1-indényl)zirconium.

5. Procédé selon la revendication 1, caractérisé en ce que le métallocène est le dichlorure de bis(pentaméthylcyclopentadiényl)zirconium.
